# EUROPEAN PATENT SPECIFICATION

(11) **EP 4 209 540 B1**
(45) Date of publication and mention of the grant of the patent: **19.11.2025**
(21) Application number: 21864156.1
(22) Date of filing: 23.08.2021
(51) Int. Cl.: C08K 5/10, C08K 5/3447, C08L 23/16, F16J 15/10, C08K 3/22, C08K 5/103, C08K 5/14, C08K 5/18, C08K 5/378

(54) **ETHYLENE/PROPYLENE COPOLYMER RUBBER COMPOSITION**
ETHYLEN-PROPYLEN-COPOLYMER-KAUTSCHUKZUSAMMENSETZUNG
COMPOSITION DE CAOUTCHOUC COPOLYMÈRE ÉTHYLÈNE/PROPYLÈNE

(30) Priority: 02.09.2020 JP 2020147268
(43) Date of publication of application: 12.07.2023
(73) Proprietor: NOK Corporation, Minato-ku Tokyo 105-8585 (JP)
(72) Inventor: KOBAYASHI, Atsushi, Fujisawa-shi, Kanagawa 251-0042 (JP)
(74) Representative: Kraus & Lederer PartGmbB
(86) International application number: PCT/JP2021/030733
(87) International publication number: WO 2022/050098

(56) References cited:
- WO-A1-2020/137781
- CN-A- 102 617 938
- JP-A- 2008 195 914
- JP-A- 2013 155 270
- JP-A- 2016 211 586
- JP-A- H06 306 217
- JP-A- H08 208 913
- JP-A- H08 269 267
- JP-A- H10 279 751
- ANONYMOUS: "ADK CIZER ADK STAB Product list", ADEKA CORPORATION, 1 January 2017 (2017-01-01), XP055907193, Retrieved from the Internet <URL:www.adeka.co.jp/chemical/catalog/pdf/J01-0816C%20No.4-4.pdf>
- INOUE, TETSUHIRO: "Plasticizers", JOURNAL OF THE SOCIETY OF RUBBER SCIENCE AND TECHNOLOGY, JAPAN, vol. 50, no. 10, 1 January 1977 (1977-01-01), pages 80 - 87, XP055907197

## Description

### TECHNICAL FIELD

The present invention relates to an ethylene/propylene-based copolymer rubber composition. More particularly, the present invention relates to an ethylene/propylene-based copolymer rubber composition having excellent mold contamination resistance.

### BACKGROUND ART

Ethylene/propylene-based copolymer rubber, which is ethylene/propylene copolymer rubber or ethylene/propylene/non-conjugated diene copolymer rubber [EPDM], has excellent heat resistance, cold resistance, water resistance (against water, LLC, etc.), oil resistance (against brake oil etc.), and the like, and is thus widely used for seal parts (O rings, gaskets, etc.) for plumbing, brakes, air conditioners, and the like.

Rubber materials used in these general-purpose products have a very large production volume, and there are many items that are continuously produced. Accordingly, automation of vulcanization molding equipment is progressing, and equipment capable of automatically loading compounds into molds, releasing products from molds after vulcanization, and finishing burr is becoming widespread.

However, in the case of rubber materials with high mold contamination, it is necessary to remove molds from the molding machine for frequent mold cleaning. Accordingly, it is impossible to avoid a significant decrease in production efficiency due to the downtime of the molding presses associated with mold cleaning, and the load of the cleaning process. These issues have led to a very high demand for reducing the frequency of mold cleaning (extending the cleaning intervals) in order to fully take advantage of the benefits of automation.

Various measures have been taken to reduce mold contamination, for example, by changing molding conditions, mold plating treatment and type of mold release agent, or by applying cleaning rubber. However, in the current situation, the application is limited to certain items due to the deterioration of productivity (vulcanization time cycle) and the high cost of capital investment (mold processing treatment).

Patent Document 1 discloses an EPDM composition obtained by compounding peroxide crosslinkable EPDM with an ether ester-based plasticizer having a molecular weight of about 500 or more. In the Examples of Patent Document 1, mold moldability (product release rate and number of times of initial mold contamination) was measured; however, the number of times of initial mold contamination was measured only up to 20 times. Further, quinoline-based 2,2,4-trimethyl-1,2-dihydroquinoline is used as an antioxidant.

Moreover, Patent Document 2 discloses an EPDM composition obtained by compounding peroxide crosslinkable EPDM with paraffinic process oil and an ester-based plasticizer. However, mold contamination is nowhere described in Patent Document 2. When paraffinic process oil and dioctyl sebacate as an ester-based plasticizer are compounded, the heat resistance and mold contamination appearance after 300 shots are inferior, as shown in the results of Comparative Example 5 described later. WO 2020/137781 A1 **discloses a epihalohydrin rubber composition that has especially excellent storage stability and is capable of giving a crosslinked product having low metal corrosiveness and excellent tensile strength, thermal aging resistance, fuel oil resistance, etc.**

CN 102617938 A **relates to the field of insulating materials for cables, and particularly relates to a cold-resistant ethyl-propylene insulating material for cables, which comprises ethylene-propylene rubber, ethylene propylene diene monomer rubber, filler, reinforcing agent, plasticizer, activator, anti-ageing agent, silane coupling agent, cross-linking agent and cross-linking assistant agent.**

JP 2016211586 A **relates to a high load transmission V-belt and a method of manufacturing the same.**

JP H08 208913 A **relates on ethylene -α- olefin copolymer rubber composition. More particularly, to suitably ethylene -α- olefin copolymer rubber composition used as such a molding material of the sliding seal member to be gas permeation resistance requirements.**

JP H08269267 A **relates to oil-bleeding polyolefin rubber composition, and more specifically, used in the connector seal timber or the like of the sealing material and electrical components of automobile parts, self-lubricating and after the built-in at the time of built-in on the excellent olefin-based rubber composition to air-tightness.**

Here, 2,2,4-trimethyl-1,2-dihydroquinoline and benzimidazole-based antioxidants are used as antioxidants.

### PRIOR ART DOCUMENT

### PATENT DOCUMENT

Patent Document 1 : JP-A-10-279751
Patent Document 2 : JP-A-2001-002864

### OUTLINE OF THE INVENTION

### PROBLEM TO BE SOLVED BY THE INVENTION

An object of the present invention is to provide an ethylene/propylene-based copolymer rubber composition comprising ethylene/propylene-based copolymer rubber, a primary antioxidant, a secondary antioxidant, and a plasticizer, and having excellent mold contamination resistance.

### MEANS FOR SOLVING THE PROBLEM

The above object of the present invention can be achieved by an ethylene/propylene-based copolymer rubber composition obtained by adding a primary antioxidant, a secondary antioxidant, a plasticizer, and an acid acceptor to ethylene/propylene-based copolymer rubber, wherein based on 100 parts by weight of the ethylene/propylene-based copolymer rubber, 0.3 parts by weight or more of the benzimidazole-based antioxidant (A) is contained as the secondary antioxidant, less than 10 parts by weight of the ether ester-based plasticizer (B) is contained as the plasticizer, 0.1 to 10.0 parts by weight of the oxide or hydroxide of a divalent metal or hydrotalcite is contained as the acid acceptor, wherein the (B)/(A) ratio is 4.0 to 10, and
wherein the primary antioxidant is an amine-based antioxidant.

### EFFECT OF THE INVENTION

The ethylene/propylene-based copolymer rubber composition according to the present invention can improve the mold contamination resistance.

The use of a benzimidazole-based antioxidant as the secondary antioxidant results in not only excellent mold contamination resistance, but also satisfactory compression set characteristics and composition kneading processability, which are essential for seal parts.

It was found that the mold contamination of ethylene/propylene-based copolymer rubber using an organic peroxide crosslinking agent was caused by a secondary antioxidant compounded to improve heat resistance, or a reaction product of the secondary antioxidant with zinc oxide compounded as an acid acceptor. It is possible to reduce the amounts of these compounding chemicals to suppress the generation of substances that lead to mold contamination; however, there is a problem that the reduction of their amounts does not satisfy the target specifications in terms of material physical properties, such as heat resistance and compression set characteristics.

Then, it was found that ether ester-based plasticizers are effective as compounding chemicals for exhibiting excellent mold contamination resistance while maintaining material physical properties.

That is, since ether ester-based plasticizers are compatible with benzimidazole-based antioxidants, the plasticizer traps the antioxidant precipitated from the rubber during vulcanization molding, thereby mitigating the aggressiveness of the antioxidant to the mold. In addition, the maintenance of heat resistance and compression set characteristics are also ensured.

According to the present invention, the number of molding shots up to mold cleaning can be dramatically improved.

Moreover, mold cleaning is generally performed by dropping or dipping using a high concentration aqueous alkaline solution at a high temperature. There is a problem that repeated mold cleaning shortens the mold life; however, there is an effect to extend the mold life itself by reducing the frequency of mold cleaning, i.e., extending the cleaning intervals.

### EMBODIMENTS FOR CARRYING OUT THE INVENTION

As the ethylene/propylene-based copolymer rubber, an ethylene/propylene/nonconjugated diene terpolymer rubber polymer [EPDM] is preferably used. As the nonconjugated diene, a small amount of dicyclopentadiene, 1,4-hexadiene, dicyclooctadiene, methylene norbornene, vinyl norbomene, or ethylidene norbornene is copolymerized. The Mooney viscosity ML₁₊₄ (125°C) thereof is 25 to 80, preferably 25 to 70.

EPDM is compounded with a primary antioxidant, a secondary antioxidant, and a plasticizer.

The primary antioxidant is preferably one that generally acts as a radical chain inhibitor, and specific examples thereof include those having anti-aging action against peroxy radicals.

Usable examples of the primary antioxidant include amine-based antioxidants, such as 4,4'-bis(α,α-dimethylbenzyl)diphenylamine, N,N'-diphenyl-p-phenylenediamine, and N,N'-di-β-naphthyl-p-phenylenediamine; quinoline-based antioxidants, such as 2,2,4-trimethyl-1,2-dihydroquinoline polymer; phenolic antioxidants, such as pentaerythrityl-tetrakis[3-(3,5-di-tert-butyl-4-hydroxyphenyl)propionate].

Preferably, an amine-based antioxidant is used at a ratio of 0.1 to 3.0 parts by weight, preferably 0.2 to 1.5 parts by weight, based on 100 parts by weight of EPDM.

As the secondary antioxidant, a benzimidazole-based antioxidant is used at a ratio of 0.3 parts by weight or more, preferably 0.3 to 1.5 parts by weight, based on 100 parts by weight of EPDM. A compounding ratio of 0.3 parts by weight or more is required to ensure heat resistance.

The use of a benzimidazole-based antioxidant as the secondary antioxidant is one of the features of the present invention. Usable examples of benzimidazole-based antioxidants include mercaptobenzimidazole, and 2-mercaptomethylbenzimidazole. Commercial products, such as Nocrac MB and Nocrac MMB (produced by Ouchi Shinko Chemical Industrial Co., Ltd.), can be also used as they are.

The use of a benzimidazole-based antioxidant as the secondary antioxidant results in not only excellent mold contamination resistance, but also satisfactory compression set characteristics and composition kneading processability, which are essential for seal parts.

If a secondary antioxidant other than benzimidazole-based antioxidants is used, the above effects cannot be obtained.

Further, if a benzimidazole-based antioxidant is used at a ratio of less than 0.3 parts by weight based on 100 parts by weight of EPDM, the mold contamination resistance is improved; however, the deterioration of heat resistance and compression set characteristics is unavoidable.

As the plasticizer, an ether ester-based plasticizer is used at a ratio of less than 10 parts by weight, preferably 1 to 8 parts by weight, based on 100 parts by weight of EPDM. If 10 parts by weight or more of the plasticizer is compounded, the mold contamination resistance is enhanced; however, the roll processability of the composition is significantly deteriorated, and none of the heat resistance and compression set characteristics of the crosslinked product can be satisfied.

As an ether ester-based plasticizer that one represented by the general formula:

R(OC₂H₄)ₙOCO(CH₂)ₘCOO(C₂H₄O)ₙR

R: a lower alkyl group having 1 to 5 carbon atoms
m: an integer of 4 to 8
n: an integer of 2 or more
is used. In practice, commercial products, such as the RS series (produced by Asahi Denka Co., Ltd.) having a molecular weight of 500 or more, preferably 500 to 900, are used. If a plasticizer having a molecular weight of 500 or less is used, due to poor heat resistance of the plasticizer itself, the heat resistance and settling resistance of peroxide crosslinked EPDM compounded with the plasticizer are consequently impaired.

Furthermore, commercially available products, such as ADK-CIZER RS-735 and ADK-CIZER RS-1000 (produced by ADEKA Corporation), can be used as they are.

Compounding a plasticizer other than ether ester-based plasticizers, for example, an ester-based plasticizer, deteriorates not only mold contamination resistance, but also heat resistance and compression set characteristics.

However, the ratio of the ether ester-based plasticizer (B) to the secondary antioxidant (A), i.e., (B)/(A), must be 4.0 times or more.

If this ratio is less than 4.0, the mold contamination resistance is deteriorated. In contrast, even when this ratio is 4.0 or more, if 10 parts by weight or more of plasticizer is used, the mold contamination resistance is excellent, whereas none of the heat resistance, compression set characteristics, and composition kneading processability is satisfied.

As the acid acceptor, an oxide or hydroxide of a divalent metal or hydrotalcite is used at a ratio of 0.1 to 10.0 parts by weight, preferably 2.0 to 6.0 parts by weight, based on 100 parts by weight of EPDM.

In particular, when zinc oxide that acts as an acid acceptor or a crosslinking aid is used, it reacts with benzimidazole, which is the secondary antioxidant, to cause various problems, as described above; however, these problems can be effectively solved using the configuration of the present invention.

As the crosslinking agent, organic peroxides are mainly preferable. Examples of organic peroxide include t-butyl peroxide, dicumyl peroxide, 2,5-dimethyl-2,5-di-t-butylperoxyhexane, 2,5-dimethyl-2,5-di-t-butylperoxyhexine-3, t-butylcumyl peroxide, 1,3-di-t-butylperoxyisopropylbenzene, 2,5-dimethyl-2,5-dibenzoylperoxyhexane, peroxyketal, and peroxyester.

Usable examples of peroxyketal include n-butyl-4,4-di(t-butylperoxy)valerate, 2,2-di(t-butylperoxy)butane, 2,2-di[4,4-di(t-butylperoxy)cyclohexyl]propane, 1,1-di(t-butylperoxy)cyclohexane, di(3,5,5-trimethylhexanoyl)peroxide, 1,1-di(t-hexylperoxy)cyclohexane, 1,1-di(t-hexylperoxy)-3,3,5-trimethylcyclohexane, and 1,1-di(t-butylperoxy)-2-methylcyclohexane.

Further, usable examples of peroxyester include t-butyl peroxybenzoate, t-butyl peroxyacetate, t-hexyl peroxybenzoate, t-butyl peroxy-2-ethylhexyl monocarbonate, t-butyl peroxylaurate, t-butyl peroxyisopropyl monocarbonate, t-butyl peroxy-3,5,5-trimethylhexanoate, t-butyl peroxymaleic acid, and t-hexyl peroxyisopropyl monocarbonate.

Regarding the amount of the crosslinking agent to be compounded, it can be added at a ratio of 0.5 to 10 parts by weight, preferably 0.8 to 5 parts by weight, more preferably 1 to 4 parts by weight, particularly preferably 1 to 3.5 parts by weight, based on 100 parts by weight of the EPDM. Within the above range, it can be prevented that foaming that occurs during vulcanization disturbs molding. In addition, since the crosslink density is good, products having sufficient physical properties become easy to obtain.

Further, a crosslinking accelerator may be contained, if necessary. As the crosslinking accelerator, triallyl isocyanurate, triallyl cyanurate, liquid polybutadiene, N,N'-m-phenylenedimaleimide, and trimethylolpropane trimethacrylate can be used. By adding an appropriate amount of crosslinking accelerator, the crosslinking efficiency can be improved, and the heat resistance and mechanical properties can also be further improved.

In addition to the above components, the rubber composition may contain, if necessary, compounding agents generally used in the rubber industry, as rubber compounding agents.

The rubber composition containing each of the above components is compounded with carbon black as reinforcing agent, reinforcing agents or fillers, such as silica, and, if necessary, various compounding agents, such as stearic acid, palmitic acid, and paraffin wax.

The rubber composition can be prepared by kneading various materials using a kneading machine, such as a single-screw extruder, a twin-screw extruder, an open roll, a Banbury mixer, a kneader, or a high shear mixer.

The vulcanization molding thereof is carried out by primary vulcanization performed at 150 to 200°C for 1 to 60 minutes and oven vulcanization (secondary vulcanization) optionally performed at 120 to 200°C for 1 to 24 hours.

### EXAMPLES

The following describes the present invention with reference to Examples.

### Example 1

| | |
|---|---|
| EPDM (EPT4045H, produced by Mitsui Chemicals, Inc., ethylene content: 54wt.%, diene content: 8.1 wt.%, Vm(125°C)28) | 100 parts by weight |
| SRF carbon black | 60 parts by weight |
| Zinc oxide | 5 parts by weight |
| Stearic acid | 0.5 parts by weight |
| Paraffinic process oil (Diana PW380, produced by Idemitsu Kosan Co., Ltd.) | 3 parts by weight |
| Dicumyl peroxide (Percumyl D, produced by NOF Corporation) | 4 parts by weight |
| 4,4'-bis(α,α-dimethylbenzyl)diphenylamine (Nocrac CD, produced by Ouchi Shinko Chemical Industrial Co., Ltd.) | 0.2 parts by weight |
| Mercaptobenzimidazole (Nocrac MB, produced by Ouchi Shinko Chemical Industrial Co., Ltd.) | 0.3 parts by weight |
| Ether ester-based plasticizer (ADK-CIZER RS735, produced by ADEKA Corporation) | 1.3 parts by weight |

Each of the above components was kneaded with a kneader and an open roll, and the obtained kneaded product (composition) was crosslinked using a vulcanizing press or an injection molding machine at 180°C for 6 minutes, followed by oven crosslinking (secondary crosslinking) at 150°C for 5 hours.

The evaluation was carried out on a crosslinked test sheet having a thickness of 2 mm or an O ring having a diameter of 3.10 (for measuring compression set) according to the JIS standard corresponding to ISO 188 and 815-1.

Heat resistance: Normal state physical property values at 150°C after 500 hours were calculated. A hardness change of less than +9 was evaluated as ○, and +9 or more as ×.

Compression set: Changes in values at 120°C after 150 hours were calculated. A change of less than 23% was evaluated as ○, 23% or more and less than 33% as △, and 33% or more as ×.

Mold contamination: Using a mold after crosslinking formation 300 times under the predetermined crosslinking condition, the presence or absence of contamination that could be visually confirmed was determined in comparison with a mold immediately after cleaning. The absence of mold contamination was evaluated as ○, and the presence of mold contamination as ×.

Kneading processability: The presence or absence of bagging was visually determined. The absence of bagging was evaluated as ○, and the presence of bagging as ×.

### Examples 2 to 4 and Comparative Examples 1 to 4

In Example 1, the amounts of mercaptobenzimidazole as a secondary antioxidant, and the amounts of ether ester-based plasticizer were changed in various ways. In addition, the zinc oxide was not used in Comparative Example 4.

### Comparative Example 5

In Example 2, in place of the ether ester-based plasticizer, the same amount (3 parts by weight) of ester-based plasticizer (dioctyl sebacate) was used.

Following table shows the measurement·evaluation results obtained, together with the amount of secondary antioxidant and the amount of plasticizer.

**Table**

| | | | Example | | | | Comparative Example | | | | |
|---|---|---|---|---|---|---|---|---|---|---|---|
| | | | 1 | 2 | 3 | 4 | 1 | 2 | 3 | 4 | 5 |
| [amount of component, parts by weight] | | | | | | | | | | | |
| (A) Secondary antioxidant | | | 0.3 | 0.7 | 1.4 | 0.3 | 1.0 | 0.7 | 0.1 | 1.0 | 0.7 |
| (B) Ether ester-based | | | 1.3 | 3.0 | 6.0 | 3.0 | 3.0 | 10.0 | 3.0 | 3.0 | |
| (B) Ester-based | | | | | | | | | | | 3.0 |
| (B) Plasticizer/(A)antioxidant | | | 4.3 | 4.3 | 4.3 | 10.0 | 3.0 | 14.3 | 30.0 | 3.0 | 4.3 |
| [Measurement·Evaluation] | | | | | | | | | | | |
| Normal state physical properties | | | | | | | | | | | |
| | Hardness | | 77 | 74 | 75 | 74 | 74 | 71 | 75 | 68 | 71 |
| | Tensile strength | (MPa) | 18.3 | 17.1 | 16.8 | 17.3 | 17.3 | 14.9 | 18.3 | 18.5 | 16.8 |
| | Elongation at break | (%) | 170 | 180 | 190 | 180 | 180 | 200 | 160 | 240 | 210 |
| Heat resistance | | | | | | | | | | | |
| | Hardness change | | +4 | +5 | +8 | +5 | +5 | +12 | +9 | +24 | +10 |
| | Tensile strength change | | -40 | -31 | -19 | -35 | -44 | -30 | -42 | -77 | -34 |
| | Elongation change | | -42 | -33 | -29 | -36 | -42 | -44 | -50 | -90 | -56 |
| | Evaluation | | ○ | ○ | ○ | ○ | ○ | × | × | × | × |
| Compression set | | | | | | | | | | | |
| | Value | | 20 | 17 | 31 | 18 | 17 | 38 | 25 | 52 | 27 |
| | Evaluation | | ○ | ○ | △ | ○ | ○ | × | △ | × | △ |
| Mold contamination | | | | | | | | | | | |
| | Presence or absence | | none | none | none | none | yes | none | none | none | yes |
| | Evaluation | | ○ | ○ | ○ | ○ | × | ○ | ○ | ○ | × |
| Kneading processability | | | | | | | | | | | |
| | Presence or absence | | none | none | none | none | none | yes | none | none | none |
| | Evaluation | | ○ | ○ | ○ | ○ | ○ | × | ○ | ○ | ○ |

The above results demonstrate the following.
(1) It can be understood from the results of each Example that the ethylene/propylene-based copolymer rubber composition of the present invention not only has excellent mold contamination resistance, but also satisfies compression set characteristics and composition kneading processability, which are essential for seal parts.
(2) In Comparative Example 1, in which the (B)/(A) ratio is 3.0, the mold contamination resistance is deteriorated.
(3) In Comparative Example 2, in which the amount of plasticizer is 10 parts by weight and the (B)/(A) ratio is 14.3, the mold contamination resistance is excellent, whereas none of the heat resistance, compression set characteristics, and composition kneading processability is satisfied.
(4) Although the mold contamination resistance can be improved by reducing the amount of secondary antioxidant or by not using zinc oxide, the deterioration of heat resistance and compression set characteristics is unavoidable (Comparative Examples 2 to 4).
(5) Compounding an ester-based plasticizer deteriorates not only mold contamination resistance, but also heat resistance and compression set characteristics (Comparative Example 5).

## Claims

1. An ethylene/propylene-based copolymer rubber composition obtained by adding a primary antioxidant, a secondary antioxidant, a plasticizer, and an acid acceptor to ethylene/propylene-based copolymer rubber, wherein based on 100 parts by weight of the ethylene/propylene-based copolymer rubber, 0.3 parts by weight or more of the benzimidazole-based antioxidant (A) is contained as the secondary antioxidant, less than 10 parts by weight of the ether ester-based plasticizer (B) is contained as the plasticizer, 0.1 to 10.0 parts by weight of the oxide or hydroxide of a divalent metal or hydrotalcite is contained as the acid acceptor,
wherein the (B)/(A) ratio is 4.0 to 10, and
wherein the primary antioxidant is an amine-based antioxidant.

2. The ethylene/propylene-based copolymer rubber composition according to claim 1, wherein 0.3 to 1.5 parts by weight of the benzimidazole-based antioxidant is used.

3. The ethylene/propylene-based copolymer rubber composition according to claim 1, wherein 1 to 8 parts by weight of the ether ester-based plasticizer is used.

4. The ethylene/propylene-based copolymer rubber composition according to Claim 1 or 3, wherein the ether ester-based plasticizer is a plasticizer represented by the general formula:
R(OC₂H₄)ₙOCO(CH₂)ₘCOO(C₂H₄O)ₙR
wherein R is a lower alkyl group having 1 to 5 carbon atoms, m is an integer of 4 to 8, and n is an integer of 2 or more.

5. The ethylene/propylene-based copolymer rubber composition according to claim 1, wherein an organic peroxide crosslinking agent is further added.

6. A crosslinked molded product of the ethylene/propylene-based copolymer rubber composition according to claim 5.

7. The crosslinked molded product according to claim 6, which is O rings or gaskets.

## Patentansprüche

1. Ethylen/Propylen-basierte Copolymerkautschukzusammensetzung, erhalten durch Zugabe eines primären Antioxidationsmittels, eines sekundären Antioxidationsmittels, eines Weichmachers und eines Säureakzeptors zu Ethylen/Propylen-basiertem Copolymerkautschuk erhalten wird, wobei, bezogen auf 100 Gewichtsteile des Ethylen/Propylen-basierten Copolymerkautschuks, 0,3 Gewichtsteile oder mehr des Benzimidazol-basierten Antioxidationsmittels (A) als sekundäres Antioxidationsmittel enthalten sind, weniger als 10 Gewichtsteile des Etherester-basierten Weichmachers (B) als Weichmacher enthalten sind, 0,1 bis 10,0 Gewichtsteile des Oxids oder Hydroxids eines zweiwertigen Metalls oder Hydrotalcit als Säureakzeptor enthalten sind,
wobei das Verhältnis (B)/(A) 4,0 bis 10 beträgt und
wobei das primäre Antioxidationsmittel ein Antioxidationsmittel auf Aminbasis ist.

2. Ethylen/Propylen-basierte Copolymerkautschukzusammensetzung nach Anspruch 1, wobei 0,3 bis 1,5 Gewichtsteile des Benzimidazol-basierten Antioxidationsmittels verwendet werden.

3. Ethylen/Propylen-basierte Copolymerkautschukzusammensetzung nach Anspruch 1, wobei 1 bis 8 Gewichtsteile des etheresterbasierten Weichmachers verwendet werden.

4. Ethylen/Propylen-basierte Copolymerkautschukzusammensetzung nach Anspruch 1 oder 3, wobei der etheresterbasierte Weichmacher ein Weichmacher ist, der durch die allgemeine Formel dargestellt wird:
R(OC₂H₄)ₙOCO(CH₂)ₘCOO(C₂H₄O)ₙR
wobei R eine niedere Alkylgruppe mit 1 bis 5 Kohlenstoffatomen ist, m eine ganze Zahl von 4 bis 8 ist und n eine ganze Zahl von 2 oder mehr ist.

5. Ethylen/Propylen-basierte Copolymerkautschukzusammensetzung nach Anspruch 1, wobei ein organisches Peroxid-Vernetzungsmittel zusätzlich zugesetzt ist.

6. Vernetztes Formteil aus der Ethylen/Propylen-basierten Copolymerkautschukzusammensetzung nach Anspruch 5.

7. Vernetztes Formteil nach Anspruch 6, welches ein O-Ring oder eine Dichtung ist.

## Revendications

1. Composition de caoutchouc copolymère à base d'éthylène/propylène obtenue en ajoutant un antioxydant primaire, un antioxydant secondaire, un plastifiant et un accepteur d'acide à un caoutchouc copolymère à base d'éthylène/propylène, dans laquelle, sur la base de 100 parties en poids du caoutchouc copolymère à base d'éthylène/propylène, 0,3 partie en poids ou plus de l'antioxydant à base de benzimidazole (A) est contenue en tant qu'antioxydant secondaire, moins de 10 parties en poids du plastifiant à base d'ester d'éther (B) est contenue en tant que plastifiant, 0,1 à 10,0 parties en poids d'oxyde ou d'hydroxyde d'un métal divalent ou d'hydrotalcite sont contenues en tant qu'accepteur d'acide,
dans lequel le rapport (B)/(A) est de 4,0 à 10, et
dans lequel l'antioxydant primaire est un antioxydant à base d'amine.

2. Composition de caoutchouc copolymère à base d'éthylène/propylène selon la revendication 1, dans laquelle 0,3 à 1,5 partie en poids de l'antioxydant à base de benzimidazole est utilisée.

3. Composition de caoutchouc copolymère à base d'éthylène/propylène selon la revendication 1, dans laquelle 1 à 8 parties en poids du plastifiant à base d'ester d'éther sont utilisées.

4. Composition de caoutchouc copolymère à base d'éthylène/propylène selon la revendication 1 ou 3, dans laquelle le plastifiant à base d'ester d'éther est un plastifiant représenté par la formule générale:
R(OC₂H₄)ₙOCO(CH₂)ₘCOO(C₂H₄O)ₙR
dans laquelle R est un groupe alkyle inférieur ayant 1 à 5 atomes de carbone, m est un nombre entier de 4 à 8, et n est un nombre entier de 2 ou plus.

5. Composition de caoutchouc copolymère à base d'éthylène/propylène selon la revendication 1, dans laquelle un agent de réticulation à base de peroxyde organique est en outre ajouté.

6. Produit moulé réticulé de la composition de caoutchouc copolymère à base d'éthylène/propylène selon la revendication 5.

7. Produit moulé réticulé selon la revendication 6, qui est un joint torique ou un joint d'étanchéité.
